# EUROPEAN PATENT APPLICATION

(11) **EP 3 075 583 A2**
(43) Date of publication of application: **05.10.2016**
(21) Application number: 16163038.9
(22) Date of filing: 30.03.2016
(51) Int. Cl.: B60H 1/00, F25D 11/00

(54) **HEATING/COOLING STORAGE CONTAINERS FOR AUTOMOBILE USE**

(30) Priority: 01.04.2015 TW 104204905; 30.12.2015 CN 201511017231; 09.02.2016 JP 2016022684; 03.03.2016 US 201615060556; 24.03.2016 CA 2925144
(71) Applicant: Wang, Cheng-Shung, Taipei 104 (TW)
(72) Inventor: Wang, Cheng-Shung, Taipei 104 (TW)
(74) Representative: Cundy, Jack William

(57) **Abstract**

A heating/cooling storage container system is disclosed. The container system 100 uses the conditioned (hot/cold) air from the HVAC system of a motor vehicle. A control switch 1A is used to activate an air distribution valve 1, directing the conditioned air of the vehicle, before blowing out from outlets on the dashboard. The conditioned air first flows into a built-in hermetic storage compartment 2 next to the vehicle driver, and then into a portable storage container 4 to keep items in both containers at a desired temperature, without affecting the designed function of the vehicle's HVAC system.

## Description

### FIELD OF THE DISCLOSURE

This invention relates generally to an apparatus for use in automobiles, and more specifically to heating/cooling storage containers using the conditioned (hot/cold) air from an automobile's heating, ventilating, and air conditioning system, e.g., the heating, ventilating, and air conditioning (HVAC) system, as the heating/cooling source.

### BACKGROUND

Today, other than major metropolitan areas, which have robust public transit systems, the vast majority of people use automobiles or motor vehicles as their primary commute tools to go work, school, shopping, and traveling. When driving any kind of motor vehicle on the road for whatever purpose, it is certain that a vehicle driver may often encounter the following two situations:
a. carrying or transporting groceries, and other perishable food or beverages that require a continuous heating/cooling system to keep them in premium quality or hot/cold fresh.
b. driver fatigue after a day of work or long hours of driving, may result in a strong desire for a hot/cold wet towel to wipe the drowsy and sleepy face and eyes or a cup of hot/cold drink to assist with the driver's attentiveness, without making a rest stop.

Over the past few decades, various invention units and approaches have been disclosed, such as various types and functions of portable storage containers with conduit to hook up to the air outlet on vehicle dashboard and a grocery chiller in a truck's storage area or in an vehicle's trunk, etc., using the conditioned (hot/cold) air from the heating, ventilating, and air conditioning (HVAC) system of vehicle as the heating/cooling source. It is also known in recent years that a small portable refrigerator, powered by automobile's DC battery through an DC power adapter, may be used to keep the above mentioned food items at a desired cold temperature while an automobile is in use.

While the above mentioned methods and units may be suitable for the particular purpose to which they addressed, none of these methods and units completely solves the above two problems. Unfortunately, until today the most common method being used by the vast majority of drivers and travelers for carrying or transporting items requiring refrigeration, such as groceries, perishable food, hot/cold drinks, and wet towels, etc., is still to place them in a portable ice chest (cooler) or an insulated Styrofoam box filled with bags of ice. Hot beverages, such as coffee, tea, or soup, are often stored inside a small thermal bottle.

It is therefore an object to provide a novel apparatus for storing contents in a heating/cooling condition.

### SUMMARY

The primary objective of the present invention as henceforth described is to provide a simple design system of heating/cooling storage containers and maintaining contents in storage containers at a desired or favorable temperature by using conditioned (hot/cold) air from the HVAC system of a vehicle. Another objective of this invention is to provide the vehicle drivers with a convenient way of grabbing conditioned items such as wet towels and drinks to assist with driver's fatigue, especially, when driving alone, after a long day of work or hours of long traveling or driving during hot summer or cold winter seasons. Thus, reducing the risk of traffic accidents caused by a driver's fatigue and increasing the overall safety of highway and road travel.

In the following, a heating/cooling storage container system is provided for automobile use, using a control switch to activate the air distribution valve, which directs the conditioned air of the vehicle, before blowing out from the air outlets on the dashboard, flowing first into a built-in hermetic storage compartment located between the front-row seats next to the vehicle driver and then, into a portable storage container for maintaining the items, such as a wet towel, food and drinks in both containers at a desired or favorable temperature, without affecting the designed function of the vehicle's HVAC system, i.e., when the control switch is on, the conditioned air flows through the hermetic storage comportment first, and then flows out from outlets on dashboard or other places; and when control switch is off, the conditioned air will flow directly out of outlets on dashboard without travelling through the hermetic storage comportment. In either way, the function of vehicle's HVAC system is not affected.

Generally, the present invention contemplates a heating/cooling storage container system which includes a built-in hermetic storage compartment associated with a portable storage container, heated/cooled by conditioned air from HVAC system of vehicle.

The design system mainly comprises, using a control switch to activate the conditioned air distribution valve. In practical operation, other than three air distribution valves or gates that have already existed in the air distribution housing of the vehicle's HVAC system, and at proper location thereof, one may create or add an additional gate/distribution valve controllable by the control switch. The gate is coupled with built-in hermetic storage comportment by a connecting conduit.

When the control switch is turned on to activate the air distribution valve (gate) to open, the conditioned air of the vehicle is directed to flow from the open gate and through the connecting conduit, into the built-in hermetic storage compartment located between the front-row seats, next to the vehicle driver. This built-in hermetic storage compartment is a fixed part of the vehicle. In practical operation, it can be a new design of vehicle, or modification or re-design of the existing open comportment of all models of new vehicles, which is then physically installed or built into the vehicle through the standard process during manufacturing. The hermetic storage compartment is divided into two parts, i.e., an upper part and a lower part, separated by a removable layer of meshed metal screen therebetween. Such a removable divider makes cleaning compartment easier. The metal screen layer has two circular seat pads or shallow hollow indents to prevent beverages from sliding. The compartment has three openings or ports of identical size. One port is located at the upper part as an inlet, for directing the vehicle's conditioned air to flow into the compartment; and the other two ports are outlets located at the lower part, one of which directs a portion of the conditioned air in the compartment to flow from the compartment into the portable storage container, and the other of which directs the remaining portion of the conditioned air in the compartment to flow back to the vehicle's original HVAC system for blowing out from the outlets on the vehicle's dashboard.

The cover of the hermetic storage compartment comprises two openings preferably sized for sealably receiving a beverage can, e.g., a coke can. Each opening is located at a position aligning with a respective one of the two circular can seats or pads on the metal screen layer. Each opening also has a removable seal cap. In use, a wet towel and/or food may be put on the metal screen layer and drink cans may be put on the seat pads through the two openings on the cover. The hermetic storage compartment can be hermetically sealed by closing cover and two seal caps.

For convenience, multiple air flow piping outlets that are used to hook up to the portable storage containers can be installed at proper locations, at the front passenger side, in the front middle area of the rear passenger row seats, and inside the trunk of the motor vehicle.

The control switch can be installed on the vehicle's dashboard as an individual control switch, or as an additional selection option integrated with the existing A/C control hub of vehicle.

According to one aspect of this disclosure, there is provided a heating/cooling container system for a vehicle. The heating/cooling container system comprises: a hermetic storage compartment having an inlet and at least a first and a second outlets, the inlet being coupled to a heating, ventilating, and air conditioning (HVAC) system of the vehicle via a first conduit for introducing a conditioned air (hot or cold) flow from the HVAC system into the built-in hermetic storage compartment, the first outlet being coupled to the HVAC system via a second conduit for directing the conditioned air flow from the built-in hermetic storage compartment back to the HVAC system; an air distribution valve coupled to the first conduit; a control switch functionally coupled to the air distribution valve for controlling the conditioned air flow from the air distribution valve of vehicle's HVAC system into the hermetic storage compartment; and at least one portable storage container coupled to the second outlet of the hermetic storage compartment for receiving the conditioned air flow therefrom.

In some embodiments, the hermetic storage compartment further comprises a metallic interior wall.

In some embodiments, the hermetic storage compartment further comprises: at least one removable layer of screen dividing said compartment into at least an upper section and a lower section.

In some embodiments, the hermetic storage compartment further comprises a cover.

In some embodiments, a top layer of the at least one removable layer of screen comprises at least one can seat pad.

In some embodiments, a top layer of the at least one removable layer of screen comprises at least one shallow hollow indent.

In some embodiments, the cover comprises at least one opening thereon, each opening being at a location corresponding to one of the at least one can seat pad.

In some embodiments, the cover comprises at least one opening thereon, each opening being at a location corresponding to one of the at least one shallow hollow indent.

In some embodiments, each of the at least one opening comprises a sealable circumferential edge for sealably receiving a beverage container.

In some embodiments, a distance between the top layer of screen and the cover is about or smaller than the beverage container for allowing a portion of the beverage container to extend out of the cover.

In some embodiments, the hermetic storage compartment further comprises at least one sealable cap for sealably closing the at least one opening.

In some embodiments, the hermetic storage compartment is a built-in compartment fixed at a location in the vehicle.

In some embodiments, the hermetic storage compartment is removably located in the vehicle.

In some embodiments, the hermetic storage compartment is located between two adjacent front-row seats.

In some embodiments, the at least one portable storage container further comprises a metallic interior wall.

In some embodiments, the at least one portable storage container further comprises at least one air adjustment port.

In some embodiments, the at least one portable storage container further comprises an outlet for coupling to another portable storage container.

In some embodiments, the control switch controls the air distribution valve for allowing or disallowing the conditioned air flow to flow into the hermetic storage compartment.

In some embodiments, the control switch further controls the air distribution valve for adjusting the amount of the conditioned air flow into the hermetic storage compartment.

In some embodiments, the control switch also controls one or more other air distribution valve in the vehicle.

In some embodiments, the conditioned air flow is a cold air flow.

In some embodiments, the conditioned air flow is a hot air flow.

### BRIEF DESCRIPTION OF THE DRAWINGS

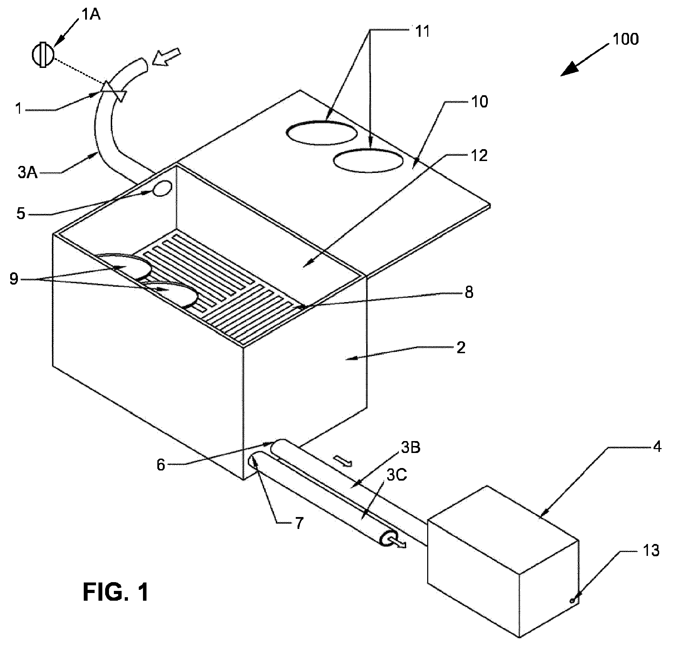

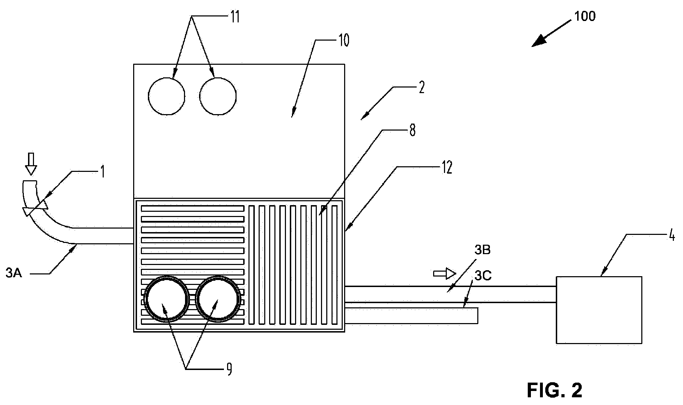

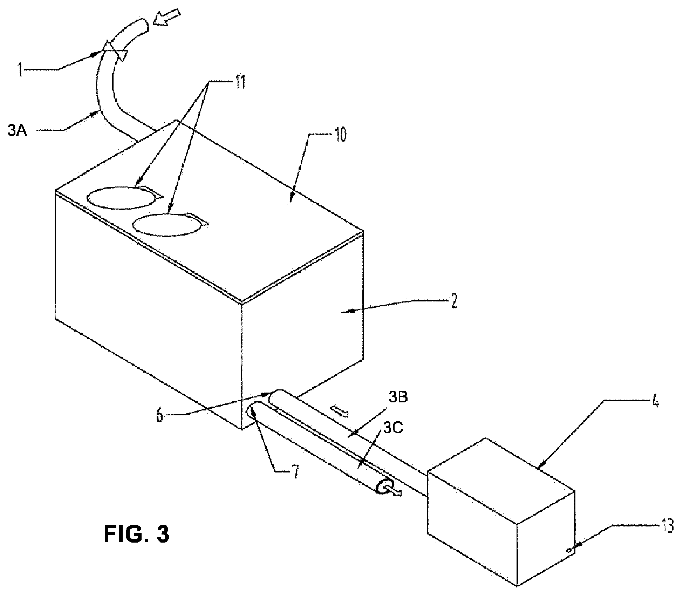

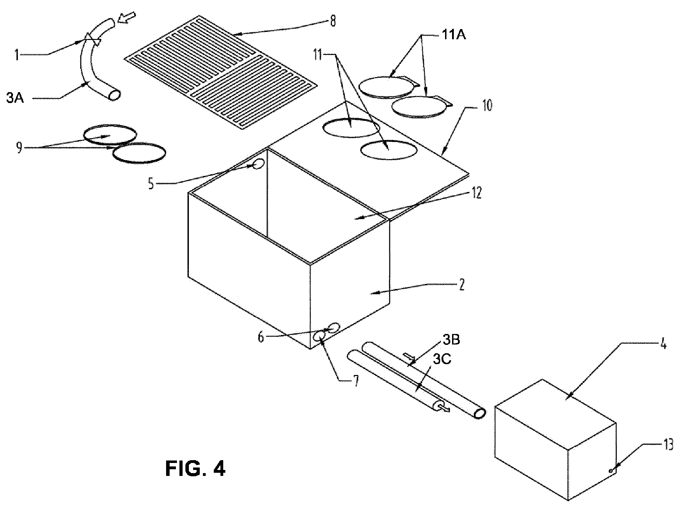

The invention will be described in more detail with the accompanying drawings FIGS. 1-4. It should be noted that other systems, methods, features and advantages of the present invention will be or will become apparent to one of ordinary skill in the art upon examination of the following figures and detailed descriptions. It is intended that all such additional apparatuses, systems, methods, features and advantages be included within this description, be within the scope of the present invention, and be protected by the appended claims. Component parts shown in the drawings are not necessarily to scale, and may be exaggerated some parts to better illustrate the important features of the present invention. In the drawings, like reference numerals designate like parts throughout the different views, wherein:
Figure 1 is a perspective view (3D) of the heating/cooling storage container system in accordance with a preferred embodiment.
Figure 2 is a top view of the heating/cooling storage container system of FIG. 1.
Figure 3 is a perspective view of the heating/cooling storage container system shown of FIG. 1, with the both cover of hermetic storage compartment and two seal caps of the opening holes in a closed position.
Figure 4 is an exploded perspective view of the heating/cooling storage container system of FIG. 1.

### DETAILED DESCRIPTION

### GLOSSARY OF REFERENCE NUMBERS SHOWN IN FIGS. 1 to 4

1: Air Distribution Valve
1A: Control Switch
2: Built-in Hermetic Storage Compartment
3A, 3B and 3C: Connecting Conduit
4: Portable Storage Container
5: Inlet (from the HVAC system of vehicle)
6: Outlet (to portable storage container 4)
7: Outlet (to the HVAC system of vehicle)
8: Meshed Metal Screen
9: Can Seat Pads (or shallow hollow indents)
10: Cover
11: Opening
11 A: Sealable Cap
12: Thin Layer of Stainless Steel
13: Air Adjustment Port

In the following, the details of the heating/cooling storage container system using the conditioned air from the HVAC system of vehicle is described with reference to FIGS. 1 to 4.

As shown in FIG. 1, the heating/cooling storage container system 100 comprises a built-in hermetic storage compartment 2 with a removable or otherwise openable cover 10, and a portable storage container 4 having an air adjustment port 13.

The built-in hermetic storage compartment 2 comprises, on the wall thereof, an inlet 5 and two outlets 6 and 7, preferably of a generally identical size. The inlet 5 is coupled to and in air communication with a connecting conduit 3A, which is in turn coupled to and in air communication with the air distribution housing of a motor vehicle's HVAC system (not shown), for directing conditioned (hot or cold) air into the built-in hermetic storage compartment 2. The outlet 6 is coupled to and in air communication with the portable storage container 4 via another connecting conduit 3B, for directing a portion of conditioned air into the portable storage container 4. The outlet 7 is coupled to and in air communication with the air distribution housing of the vehicle's HVAC system via a third connecting conduit 3C for directing the remaining portion of the conditioned air from the compartment 2 back to the HVAC system to blow out from outlets located on the vehicle's dashboard (not shown) or other places.

To speed up absorption and prolong preservation of the conditioned air within compartment 2, the hermetic storage compartment 2 comprises a metallic interior wall, such as a thin layer separator 12 made of stainless steel or similar material covering the entire interior wall of the hermetic compartment 2. Similarly, the portable storage container 4 also comprises a metallic interior wall.

In the built-in hermetic storage compartment 2, a removable meshed metal screen 8 divides the compartment 2 into two parts, i.e., an upper part and a lower part. In this embodiment, the inlet 5 is located on the wall of the upper part, and the outlets 6 and 7 are located on the wall of the lower part.

The meshed metal screen 8 comprises thereon two circular can seat pads 9 (or two shallow hollow indents) thereon. Correspondingly, the cover 10 of the hermetic compartment 2 comprises two openings 11 located at respectively positions aligning with the two circular can seat pads 9 on the metal screen 8, and are preferably sized for sealably receiving a beverage can, e.g., a coke can. In this embodiment, each opening 11 has a sealable circumferential edge, e.g., coated or otherwise covered by a suitable sealable material, with a diameter slightly smaller than that of a standard beverage can such that a beverage can may be sealably inserted into an opening 11. Moreover, the meshed metal screen 8 in this embodiment is located in the hermetic storage compartment 2 at a position such that the vertical distance between the meshed metal screen 8 and the cover 10 is about or smaller than the height of a standard beverage can such that, when a beverage can is sealably received in the opening 11, a portion of the beverage can is extended out of the cover 10, suitable for conveniently grabbing the beverage can out of the hermetic storage compartment 2.

Wet towels (paper or cloth) and food may be put on metal screen layer 8 by opening the cover 10 or through the openings 11. Drink cans may also be put on the can seat pads 9 through the openings 11. When no beverage cans are received in the openings 11, the two openings 11 may be sealably closed by removable, sealable caps 11A for maintaining the temperature inside the hermetic compartment 2.

Under the control of a control switch 1A, an air distribution valve 1 on the connecting conduit 3A adjusts the air flow in the connecting conduit 3A. In this embodiment, the air distribution valve 1 is a controllable gate. As mentioned above, the air distribution valve 1 may be created or added as an additional gate controllable by the control switch 1A in the air distribution housing of vehicle's HVAC system. When the air distribution valve 1 is turned on by the control switch 1A, the gate panel thereof opens, thereby directing the conditioned air flow through the opened gate of the air distribution valve 1 and the connecting conduit 3A to the hermetic compartment 2. When the air distribution valve 1 is turned off by the control switch 1A, the gate thereof closes, disconnecting the hermetic compartment 2 from the conditioned air. Of course, in some alternative embodiments, the control switch 1A may further control the amount of conditioned air flowing into the hermetic compartment 2.

Usually, a motor vehicle comprises a plurality of air distribution valves or gates in the air distribution housing of vehicle's HVAC system, e.g., three (3) existing air distribution valves (three (3) gates), controlled by, e.g., a central control switch on the dashboard. For example, many vehicles' HVAC system has three air distribution valves for distributing conditional air through a front outlet for air blowing out in front of the driver, a lower outlet for air blowing out about the driver's feet, and an upper outlet for air blowing out to the windshield.

The control switch 1A may be a separate control switch on the dashboard additional to the central control switch, or alternatively be a part of the central control switch, e.g., as a switch option thereof that the central control switch may be turned to. Therefore, the central control switch may act as the control switch 1A controlling the air distribution valve 1, and also controls other air distribution valves.

In this embodiment, when the control switch 1A turns on the air distribution valve 1, all other air distribution valves in the motor vehicle are turned off such that the conditioned air will be fully directed through the connecting conduit 3A and inlet 5, into the built-in hermetic storage compartment 2 located between the front-row seats and next to the vehicle driver, and then, partially to the portable storage 4 and partially back to the HVAC system. And eventually, after the portable container 4 is full of conditioned air, the conditioned air in the hermetic compartment is fully directed back to the HVAC system and blowing out from the outlets on the dashboard and/or other places. Of course, in some alternative embodiments, when the control switch 1A turns on the air distribution valve 1, at least some other air distribution valves, e.g., the front air distribution valve (front gate) in the air distribution housing of vehicle's HVAC system, may also be turned on such that some conditioned air is directed into the hermetic compartment 2 and at the same time some other conditioned air is directed to the outlets on the dashboard and/or other places, blowing therefrom, without going through the hermetic compartment 2. For example, in some embodiments, an independent control switch 1A may turn on both the air distribution valve 1 and the front gate/valve simultaneously. In some alternative embodiments, a central control switch may comprise a selection option of turning on both the front gate and the air distribution valve 1 simultaneously.

When the control switch 1A turns the air distribution valve 1 off, the built-in hermetic storage compartment 2 and the portable storage container 4 are then disconnected from conditioned air.

By the theory of balance, the amount of conditioned air flowing into the hermetic storage compartment 2 equals to the amount of conditioned air flowing out therefrom. Thus, after the portable storage container 4 is full of conditioned air, the identical size of inlet 5 and outlet 7 allows the rate and amount of conditioned air flowing into the hermetic storage compartment to be equal to the amount of conditioned air flowing out through the connecting conduit 3C back to the HVAC system of the vehicle, finally blowing out from outlets on the vehicle dashboard. Therefore, the temperature and pressure inside the hermetic storage compartment 2 remains at a steady state without the risk of the air being too hot/cold or too high/low pressure inside the compartment.

While the conditioned air flowing into the compartment through the upper inlet 5 and flowing out through the lower outlets 6 and 7 automatically keeps the conditioned air in compartment 2 a flowing fresh, the adjustable air adjustment port 13 of the portable container 4 can slowly release air from the container to keep the conditioned air in the container 4 fresh.

The portable storage container 4 has an inlet with suitable coupling means to hook up with the connecting conduit 3B to hermetic storage compartment 2. Moreover, similar to the hermetic storage compartment 2, the portable storage container 4 may have a thin layer of stainless steel or similar material to cover the entire interior wall thereof to speed up absorption and prolong preservation of the conditioned air within the container.

For convenience, multiple air flow piping outlets 6 with corresponding sealable caps for connecting with portable storage containers 4 can be installed at proper locations, including the front passenger side, the middle area of rear passenger row seats, and inside the trunk of the motor vehicle. Each outlet will be sealed by a cap when not in use. In practical operation, the pipe outlet 6 of the hermetic storage compartment 2 can be piping out first then, can be split out via two Y joints to form a series of three outlets 6 located at three proper locations as mentioned above for coupling to a maximum of three portable storage containers 4 at the same time. For example, the portable container 4 can be hooked up with pipe outlet 6 located at the middle area of rear passenger row seats when there is a passenger in the vehicle. However, when the vehicle is full of passengers, the portable storage container 4 can be alternatively placed in the trunk and be hooked up with the outlet installed in trunk. Multiple portable storage containers 4, e.g., three portable storage containers 4, can be used at same time as needed.

As mentioned earlier, the vehicle operator often craves for a wet and hot/cold towel to wipe their drowsy and sleepy face and eyes. The operator may also crave for a cup of hot/cold drink as well to help prevent driver's fatigue, while driving alone daily after work or after a long trip driving during hot summers and cold winters. As provided herein, the conditioned wet towel and drinks in the hermetic storage compartment 2 are situated in a conveniently hand accessible position, without the need to stop the vehicle to rest or diverting the driver's attention from driving. As stated before, this can help reduce the risk of vehicle accidents, which may be caused by driver's fatigue, and thus greatly increasing the overall safety of highway traffic if the adoption of this invention is mass produced in automobile vehicles.

The heating/cooling storage container system 100 disclosed herein is easy, quick and handy to use. In practical applications, the heating/cooling storage container system 100 may be installed in motor vehicles during manufacturing. Thus, a user only needs to enter the motor vehicle, turn on the engine, turn on the A/C and select air flow through the hermetic storage compartment. A wet & cold towel in compartment will be ready for grabbing within just 1 to 3 minutes. Warming items may require a little longer time until the engine of vehicle is hot. Also, drinks can be heated or cooled in a slightly longer time.

The heating/cooling storage container system 100 disclosed herein may be made of a variety of suitable material, with suitable sizes, dimensions and shapes. A designer may customize the parts as needed, including customizing the air distribution valve control switch 1, built-in hermetic storage compartment 2, connecting conduits 3A to 3C, portable storage container 4, inlet 5, outlet 6 (to portable container), outlet 7 (to HVAC system of vehicle), meshed metal screen 8, can seat pads (or shallow hollow indents) 9, cover 10, openings 11 and seal caps 11A, thin layer of stainless steel 12, air adjustment port 13. Therefore, the heating/cooling storage container system 100 disclosed herein provides the designers and motor vehicle manufacturer great flexibility in including the heating/cooling storage container system 100 in their various types and models of motor vehicles with adequately incorporating with their original production lines.

The fundamental principle and practical implementation of the heating/cooling storage container system 100 disclosed herein may be fully extended to all different types and models of new motor vehicles through manufacturing, including but not limited to, passenger cars, sport utility vehicles (SUVs), minivans, trucks, and even 18 wheelers, so long as there is provided an open storage compartment space next to the vehicle driver.

The heating/cooling storage container system 100 disclosed herein combines a built-in hermetic storage compartment 2 and a portable storage container 4. Herein, "built-in" means physically building the hermetic storage compartment 2 into the motorized vehicle as an integrated or fixed part of the vehicle. The built-in hermetic storage compartment 2 must be installed into the vehicle during manufacturing or production of a new vehicle. It may be impractical to modify an existing vehicle to install the hermetic storage compartment 2 thereinto.

The position of the built-in hermetic compartment 2 is and must be located between the front-row seats, next to the vehicle driver for fulfilling the purpose of providing convenience to the driver to grab conditioned (hot/cold) wet towel and drinks anytime without taking a rest stop or even slowing down the vehicle. Once the built-in hermetic compartment 2 is adopted by a newly manufactured vehicle of any type and model, the driver is able to use it anytime, every day while driving vehicle. The size of this built-in hermetic compartment 2 may be determined by a designer, e.g., depending on the availability of the interior space of a vehicle. In some embodiments, the built-in hermetic compartment 2 may have a size/dimension similar to the open compartment seen in the vehicles currently in the market, and may be located at a similar place between two front-row seats (driver and passenger).

The portable container 4 is a detachable and hand carry type container, e.g., similar to a hand-carry ice chest or cooler box. The portable storage container 4 can be coupled to piping outlet 6 when in use or detached from piping outlet 6 when not in use. In other words, the portable storage container 4 is not permanently fixed to the vehicle, nor an integrated part of vehicle. It may be used occasionally, when one has to prepare some fresh food for a long-drive traveling or going out of town for grocery shopping, keeping the fresh food such as meat, sea food, bread, sandwich, and the like, in fresh.

While the portable storage container 4 requires suitable means to couple to or hook-up with the connecting outlet 6 that connects to the hermetic storage compartment 2, the portable storage container 4 may be made of any suitable material, e.g., the known material for making cooler boxes. Moreover, the size of the portable storage container 4 may be any suitable size, e.g., small, medium or large size. The size of the portable storage container 4 may be irrelevant to that of the built-in hermetic storage compartment 2. Further, multiple portable storage containers 4 may be coupled to each other and to the hermetic storage compartment 2 in serial. In some alternative embodiments, the hermetic storage compartment 2 may comprise multiple outlets for coupling to multiple portable storage containers 4.

In some other embodiments, a portable storage container 4 may comprise multiple outlets for coupling to multiple other portable storage containers. For example, one may use three (3) large portable storage containers to couple to three (3) piping outlets 6 installed in front-row passenger side, rear passenger row seat, and in vehicle trunk. As another example, if the vehicle needs to carry multiple passengers, one large portable storage container coupling to the piping out 6 in the vehicle trunk may be used.

In some alternative embodiments, the heating/cooling storage container system 100 may comprise more than one built-in hermetic storage compartment 2, at least some of which may each may be coupled to one or more portable storage containers 4.

In above embodiment, the built-in hermetic storage compartment comprises one layer of meshed metal screen 8 dividing the compartment into an upper section or portion and a lower section or portion. In some alternative embodiments, the built-in hermetic storage compartment may comprise more than one layer of meshed metal screen 8 dividing the compartment into a plurality of sections.

In an alternative embodiment, a top layer of meshed metal screen 8 may comprises thereon any suitable number, e.g., one two or more, circular can seat pads 9. Correspondingly, the cover 10 of the hermetic compartment 2 comprises the same number of openings 11 located at respectively positions aligning with the circular can seat pads 9 on the metal screen 8, and are preferably sized for sealably receiving a beverage can, e.g., a coke can.

Although in above embodiments, the hermetic storage compartment is a built-in compartment, in some alternative embodiments, the hermetic storage compartment may be a portable compartment.

In an alternative embodiment, the conditioned air in the compartment 2 may not flow back to the HVAC system. Rather, the conditioned air in the compartment 2 may directly flow out from outlet 7.

Although embodiments have been described above with reference to the accompanying drawings, those of skill in the art will appreciate that variations and modifications may be made without departing from the scope thereof as defined by the appended claims.

## Claims

1. A heating/cooling container system for a vehicle comprising:
a hermetic storage compartment, having an inlet and at least a first and a second outlets, the inlet being coupled to a heating, ventilating, and air conditioning (HVAC) system of the vehicle via a first conduit for introducing a conditioned air flow from the HVAC system into the hermetic storage compartment, the first outlet being coupled to the HVAC system via a second conduit for directing the conditioned air flow from the hermetic storage compartment to the HVAC system;
an air distribution valve coupled with the first conduit;
a control switch functionally coupled to the air distribution valve for controlling the conditioned air flow from the air distribution housing of the vehicle's HVAC system into the hermetic storage compartment; and
at least one portable storage container coupled to the second outlet of the hermetic storage compartment via a third conduit for receiving the conditioned air flow therefrom.

2. The container system of claim 1 wherein the hermetic storage compartment further comprises a metallic interior wall.

3. The container system of claim 1 or 2 wherein the hermetic storage compartment further comprises:
at least one removable layer of screen dividing said compartment into at least an upper section and a lower section.

4. The container system of claim 3 wherein the hermetic storage compartment further comprises a cover.

5. The container system of claim 4 wherein a top layer of the at least one removable layer of screen comprises at least one can seat pad.

6. The container system of claim 5 wherein the cover comprises at least one opening thereon, each opening being at a location corresponding to one of the at least one can seat pad.

7. The container system of claim 6 wherein each of the at least one opening comprises a sealable circumferential edge for sealably receiving a beverage container.

8. The container system of any one of claims 6 to 7 wherein the hermetic storage compartment further comprises at least one sealable cap for sealably closing the at least one opening.

9. The container system of any one of claims 1 to 8 wherein the hermetic storage compartment is a built-in compartment fixed at a location between two adjacent front-row seats of the vehicle.

10. The container system of any one of claims 1 to 9 wherein the second outlet of the hermetic storage compartment is coupled to two Y joints to form three outlets for coupling to up to three portable storage containers at the same time.

11. The container system of claim 10 wherein the three outlets are installed at one each of: the front passenger side of the vehicle; the middle area of rear passenger row seats of the vehicle; and inside the trunk of the vehicle.

12. The container system of any one of claims 1 to 11 wherein the at least one portable storage container further comprises a metallic interior wall.

13. The container system of any one of claims 1 to 12 wherein the at least one portable storage container further comprises at least one air adjustment port.

14. The container system of any one of claims 1 to 13 wherein the control switch is installed on a dashboard of the vehicle, either by itself or integrated with an existing A/C control hub of vehicle.

15. The container system of claim 14 wherein the control switch controls the air distribution valve for allowing or disallowing the conditioned air flow to flow into the hermetic storage compartment.
